# EUROPEAN PATENT SPECIFICATION

(11) **EP 0 770 866 B1**
(45) Date of publication and mention of the grant of the patent: **22.05.2002**
(21) Application number: 96660065.2
(22) Date of filing: 04.10.1996
(51) Int. Cl.: G01N 15/08

(54) **Method and device for measurement of the permeability to air of a drying wire**
Verfahren und Vorrichtung zur Messung der Luftdurchlässigkeit in Trockenfilz
Procédé et dispositif pour la mesure de la perméabilité à l'air d'une toile de séchage

(30) Priority: 23.10.1995 FI 955039; 17.01.1996 FI 960220
(43) Date of publication of application: 02.05.1997
(73) Proprietor: Metso Paper, Inc., 00130 Helsinki (FI)
(72) Inventor: Virta, Raimo, 20300 Turku (FI)
(74) Representative: Jyrämä, Hanna-Leena Maria

(56) References cited:
- EP-A- 0 107 482
- EP-A- 0 240 881
- EP-A- 0 307 289
- DE-A- 3 830 308
- DE-A- 4 217 682
- GB-A- 2 093 597

## Description

The invention concerns a method according to the preamble of claim 1.

The invention also concerns a device for carrying out the method for measurement of the permeability to air of a drying wire according to the preamble of claim 1.

Measurement of the penetrability to air, i.e. permeability of drying wires can be concerned, for example, in connection with monitoring of the condition of the wires. Said measurements of permeability must be carried out in an industrial environment on the site. Permeability meters are included, for example, in the standard equipment of every paper mill, and they are used, in particular, for measurements of the permeability of plastic wires. Drying wires tend to be blocked by dust or as a result of a phenomenon of mangling when the wire mesh size becomes smaller, which lowers the permeability. A certain permeability is, however, highly important for the operation of a drying wire, for example, in view of the operation and runnability of pocket ventilation devices. Based on measurements of permeability it is decided whether a wire in a paper machine must be replaced or cleaned.

Measurement of permeability can also be used in order to monitor or to control the operation of devices for cleaning or washing of drying wires. From measurements of permeability it is possible to conclude the condition of the wire at each particular time, in which case, when necessary, the wire can be replaced before it is broken.

Measurement of permeability is also used by drying wire manufacturers, who measure the permeability in connection with the quality control of the manufacture in order to establish the uniformity of the quality of the drying wire.

In measurement of the permeability of drying wires, it has been a drawback of some prior-art methods and devices that the paper machine has had to be stopped for the time of permeability measurement. This is why the measurement has resulted in highly remarkable costs, for standstill time of a paper machine is very expensive.

In the FI Patent Application No. **872764** a method and a device are described for continuous measurement of porosity, wherein the vacuum produced by a suction blower is measured continuously by means of a measurement detector and said vacuum is maintained as invariable as possible by means of a regulator which controls the suction blower. From the measured quantity of flowing air and from the other parameters of the air and of the web received from the measurement detectors, the porosity of the web gliding over the measurement head is calculated. However, it is a drawback in this prior-art solution that by its means it is not possible to determine little flow quantities accurately. It is a further problem that measurement arrangements with contact, which include rubbing faces, are not suitable for use in connection with drying wires.

In the FI Patent No. **93,397** a method and a measurement device for measurement of the permeability to air of a felt in a paper machine are described, in which method the flow of air produced by a suction box through the felt is passed through a measurement pipe that forms the measurement duct, and the air flow in the measurement duct is measured by means of a pitot tube fitted in it. In the measurement device, there is a suction nozzle placed against the felt at the side opposite to the suction box, to which suction nozzle the suction pipe that forms the measurement duct is connected, in which suction pipe a pitot tube is fitted, to which pitot tube a meter is connected by means of a connector part and ducts in order to measure the pressures produced by the flow of air. However, as was the case with the prior-art solution described above, in this prior-art method of measurement it is a problem that the method is not suitable for accurate measurement of little flow quantities nor for measurement of drying wires, because in the arrangement a measurement with contact is concerned, in which case rubbing faces are involved.

In the FI Patent No. **77,119** a method is described for measurement of the penetrability to air, i.e. the permeability, of fabrics permeable to air in a paper machine, in particular of a wire or felt. In the method the fabric permeable to air, such as a wire, is passed over at least one roll, in which case, when the fabric runs, at the inlet side of the fabric, in the inlet nip between the moving fabric and the roll face, a pressure is formed, and at the outlet side of the moving fabric, in the outlet nip of the fabric between the fabric and the roll face, a vacuum is formed. Said pressure and vacuum depend on the permeability of the fabric permeable to air. According to the method, below the permeable fabric, such as a wire, at least one device is installed, which is sealed in relation to the face of the moving roll so that an at least partly closed pressure space is formed between said device, the roll face and the fabric. When the fabric permeable to air, such as a wire, moves, then the pressure is measured from said pressure space, and from the measured value of pressure the permeability of the fabric permeable to air is calculated. In this solution, problems may be caused by the fact that the pressure values of the pumpings of air produced by the wire face are very low and do often not depend on the wire permeability.

The GB Patent Application No. 2,093,597 discloses a device and a method for monitoring the gas-permeability of a sheet material, comprising a first flow chamber having an inlet which, during operation of the device, is closed by the sheet material extending across said inlet, gas-measurement means operable to measure gas flow or gas pressure in the first flow chamber, and a second flow chamber having an outlet whereby a gaseous medium may be directed towards the sheet material, there being provided a gas-leakage path whereby a significantly greater proportion of the gas flow in the second flow chamber is permitted to leak to atmosphere that that proportion which passes through the sheet material into the first flow chamber.

The object of the present invention is to provide a method and a device for measurement of the permeability to air of a drying wire, in which method the drawbacks of the prior-art solutions have been eliminated or at least minimized.

It is a particular object of the invention to provide a method and a device which are easier to operate and quicker than the prior-art methods and devices for similar measurement and which are also well suitable for measurement of the permeabilities of wires in their site of operation without stopping the paper machine and suitable for use in the measurement of permeability carried out by wire manufacturers.

In view of achieving the objectives stated above and those that will come out later, the method in accordance with the present invention is characterized in that which is stated in the characterizing part of claim 1.

On the other hand. the device in accordance with the invention is characterized in that which is stated in the characterizing part of claim 12.

By means of the present invention, a number of significant advantages are obtained over the prior-art solutions. Of these advantages, e.g., the following can be stated. By means of the method and the device in accordance with the invention, measurement of permeability can be carried out from drying wires on their operating site without stopping the paper machine. The measurement of permeability can be carried out continuously, i.e. the condition of the wire can be monitored constantly. The measurement can be carried out as a block measurement so that the measurement results are obtained from several different points in the direction of width of the wire. The device can also be fitted in a mobile equipment fixed in the vicinity of the wire face, in which case it is possible to measure a continuous permeability profile in the cross direction of the wire. Based on the measurement results obtained, it is possible to clean a blocked drying wire or to replace a wire that is in bad condition before the wire is broken, in which case said replacement of the wire alone makes stopping of the paper machine necessary.

It is a further important feature of the invention that the flow-through required by the measurement box is guided to take place between the measurement box and the moving face, whereby, at the same time, a contact-free measurement arrangement is obtained.

According to the invention, at one side of the drying wire, there is a blow box that generates a pressure or a vacuum and operates, for example, with the **UNO-RUN-BLOW-BOX ™** nozzle principle, which blow box is placed apart from the wire face and by means of which box a zone of pressure or vacuum is produced between the box and the wire, and the measurement box is also placed apart from the wire face. In the process of measurement, the pressure in the measurement box and/or the relative change in said pressure is/are measured when the blow box is switched on to blowing, whereby the permeability of the wire and/or the change in permeability is/are established in comparison with earlier measurements/starting values, and in this way the need of cleaning/replacement of the wire can be determined.

When the arrangement in accordance with the invention is used for measurement of permeability carried out in connection with the wire manufacture, the measurement takes place typically at a low speed, for example about 10 metres per minute, in which case it is possible to use support rolls, by whose means the drying wire is kept at the correct distance from the blow box and from the measurement box, the drying wire, thus, by-passing both the blow box and the measurement box free of contact.

According to the invention, in a paper machine, the measurement is carried out preferably at the operating speed. It is also possible to carry out the measurement at a crawling speed, in which case it is possible to record the permeability profile of the wire in the longitudinal direction. At full running speed the average level of permeability of the wire is measured, which level can be compared, for example, with the level of permeability of a new wire, whereby the need of cleaning is seen.

The device in accordance with the invention can be mounted as fixed at its measurement site, or it can be constructed as mobile, for example, on a profile beam. According to the invention, devices can be placed, in the direction of width of the wire, for example, at both edges and in the middle, or it is possible to construct an arrangement in which a number of boxes are used, whereby the whole width of the wire can be covered.

The method and device of measurement in accordance with the invention can be applied to measurement of the permeability of drying wires in single-wire draw and so also to measurement of the permeability of drying wires in twin-wire draw.

In the following, the invention will be described in detail with reference to the figures in the accompanying drawing, the invention being, however, in no way strictly confined to the details shown in said figures.

Figure 1 is a schematic illustration of the measurement of permeability in an inlet nip of a drying wire.

Figure 2 is a schematic illustration of the measurement of the permeability of a drying wire in an outlet nip of the wire.

Figure 3 is a schematic illustration of an edge nozzle of a blow box that generates a pressure as shown in Fig. 1.

Figure 4 is a schematic illustration of an edge nozzle of a blow box that generates a vacuum as shown in Fig. 2.

Figure 5 is a schematic illustration of the roll face of the measurement box used in the arrangement in accordance with the invention and of the lateral seals and end seals connected with said box.

Figure 6 is a schematic illustration of an exemplifying embodiment in which measurement devices are placed in the direction of width of the drying wire at the edges of the drying wire and in its middle.

Figure 7 is a schematic illustration of an arrangement in which the permeability of the drying wire is measured in the cross direction of the machine across the entire width by using separate blocks in the blow box.

Figure 8 is a schematic illustration of a measurement device intended for a low speed, in particular for use in connection with the manufacture of wires.

Figure 9 is a schematic illustration of a measurement device intended for a low speed, in which the blow box and the measurement box are placed at the same side of the drying wire.

Figure 10 is a schematic illustration of a measurement device to be used in a paper machine preferably at the running speed, in which device the blow box and the measurement box are placed at the same side of the drying wire.

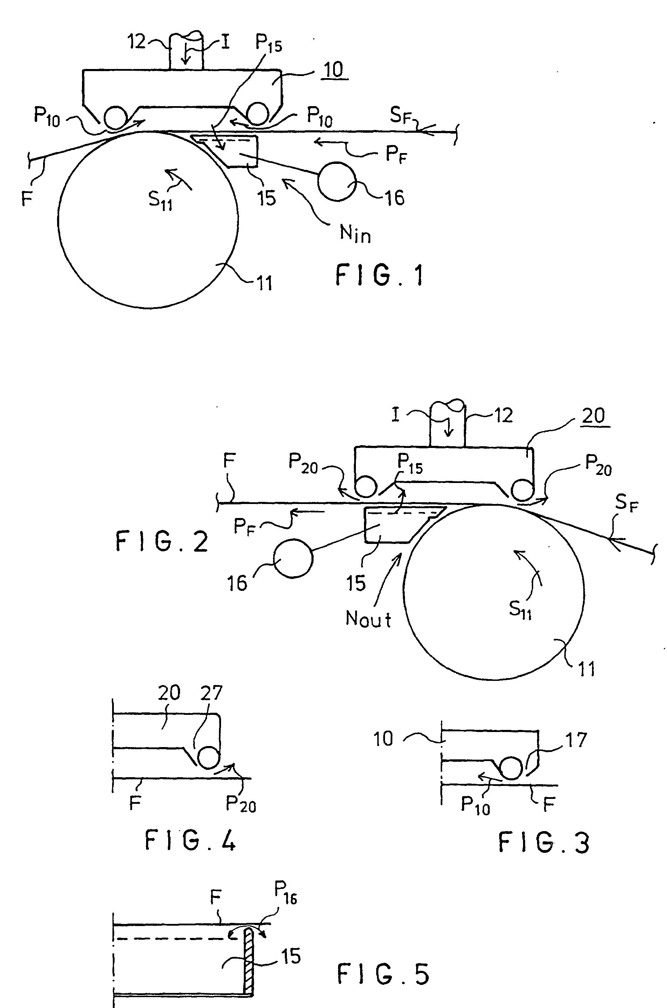

In the exemplifying embodiment of the invention shown in Fig. 1, the penetrability to air, i.e. the permeability of the drying wire F is measured in the inlet nip Nᵢₙ of the drying wire F arriving on the wire guide roll 11. The running direction of the drying wire F is denoted with the arrow S_{F}, and the wire guide roll 11 revolves in the sense indicated by the arrow S₁₁. At the side of the drying wire F opposite to the wire guide roll 11, a blow box 10 that generates a pressure is placed, into which box air I is passed out of a feed pipe 12. Out of the blow box 10 the air is passed as edge-nozzle blowings P₁₀ onto the wire F face so that the blowings P₁₀ are directed from the nozzles towards the middle of the blow box 10, in which case the area between the wire F and the box 10 is subjected to a pressure and air is passed into the passive measurement box 15 if the drying wire F has any remaining permeability. The pressure in the measurement box 15 is measured by means of a pressure gauge 16. Based on the pressure measurement, the relative pressure and/or the change in pressure is/are obtained, on whose basis the permeability and/or the relative permeability value is/are determined. The pressure gauge 16 is read, for example, in a situation in which the blower does not blow air into the box 10 and in a situation in which the blower blows air into the box 10. In this way a relative pressure value is obtained, which can be compared, for example, with the pressure value measured in connection with the introduction of said wire to operation, and thereby the permeability to air of the drying wire F can be determined.

Along with the drying wire F, air is pumped into the inlet nip Nᵢₙ as the air flow P_{F}, a certain positive pressure being formed in the inlet nip Nᵢₙ. Out of the blow box 10, air flows P₁₀ are blown into the gap between the drying wire F and the box 10, whereby the top side of the wire F is pressurized. Then the air passes as the air flow P₁₅ through the wire F and enters into the measurement box 15 and produces a change in the pressure in the measurement box 15. The pressure in the measurement box 15 is read from the pressure gauge 16, whereby a pressure value is obtained, on whose basis a permeability value is determined, which is compared with the permeability value of the wire F, for example with a measurement result obtained in connection with the introduction of the wire or with an earlier measurement result. When the wire F is blocked, the measurement value of the measurement box 15 becomes lower, and when the wire F is fully blocked, the air flow P₁₅ cannot pass through the wire and does, thus, no longer produce an increase in the pressure in the measurement box 15, from which it is known that the wire must be cleaned or replaced.

In the exemplifying embodiment shown in Fig. 2, the measurement is arranged to take place in the outlet nip Nₒᵤₜ of the drying wire F at the wire guide roll 11, and at the outlet side, at the side of the drying wire F opposite to the wire guide roll 11, a blow box 20 that generates a vacuum is placed, into which air I is passed out of the feed pipe 12. Out of the blow box 20 the air is passed as an edge blowing P₂₀ away from the blow box 20, whereby an area with a vacuum is formed between the drying wire F and the blow box 20 by the effect of the ejection effect of the air flows P₂₀. The air flow departing from the passive measurement box 15 by the effect of the upper vacuum is denoted with the arrow P₁₅. The pressure gauge is denoted with the reference numeral 16. The running direction of the drying wire F is denoted with the arrow S_{F}, and the wire guide roll 11 revolves in the direction indicated by the arrow S₁₁.

The drying wire F takes away air along with it as the air flow P_{F}, whereby the outlet nip Nₒᵤₜ is subjected to a vacuum. At the side of the wire F opposite to the outlet nip Nₒᵤₜ, there is the blow box 20 that generates a vacuum, the air flows P₂₀ being produced by means of edge blowings at said box, which air flows P₂₀ produce a vacuum between the wire F and the blow box 20. Then, air also flows from the opposite measurement box 15 through the wire F as the flow P₁₅ to the side of the blow box 20 and produces an increased vacuum in the measurement box 15. When the pressure value of the measurement box 15 is measured by means of the pressure gauge 16, a pressure value is obtained, which can be compared with the measurement result obtained in connection with the introduction of the wire or with a result obtained when the blow box 20 is not in operation. Then, a relative pressure value is obtained, on whose basis the permeability value is determined. When the wire F is fully blocked as a result of contamination, no more air flows from the side of the measurement box 15 to the side of the blow box 20, at which stage the vacuum in the measurement box 15 is minimal, i.e. the situation corresponds to the reading value with which there is no effect of the blow box 20.

The width of the blow box 10;20 is, for example, 0.2...1 metre, and in it, for example, nozzle pressures of 300...5000 Pa can be used, and the pressure level of the blow box is 50...500 Pa, and the pressure in the measurement box is 20...400 Pa.

In the embodiments shown in Figs. 1 and 2, the change in the permeability of the drying wire F is measured while the machine is in operation. The measurements of the drying wire are carried out at suitable time intervals, for example as automatically programmed once in a week, or the system can be connected with a monitoring equipment, which gives an alarm when the degree of blocking of the wire approaches the limit of cleaning necessity.

Fig. 3 is a schematic illustration of an edge nozzle 17 of a blow box 10 as shown in Fig. 1, out of which nozzle the air flow P₁₀ is blown onto the drying wire F. By means of the shape of the nozzle 17, turning of the air flow P₁₀ is obtained towards the area between the blow box 10 and the wire F so as to produce positive pressure.

Fig. 4 is a schematic illustration of an edge nozzle 27 of a blow box 20 that generates a vacuum as shown in Fig. 2, out of which nozzle the air flow P₂₀ is blown onto the drying wire F. By means of the shape of the nozzle 27, the air flow P₂₀ is turned away from the area between the blow box 20 and the drying wire F, whereby, by means of the ejection effect of the air flows P₂₀, a vacuum is produced.

The blow box 10;20 is mounted in the vicinity of the wire guide roll 11, whereby the deflection of the wire has been minimized and, at the same time, the sealing of the measurement box 15 can be arranged more easily.

Fig. 5 shows the roll and wire face of the measurement box 15 and the related edge and end seals. The seal faces of the measurement box 15 do not contact the wire F, but they permit a certain leakage flow P₁₆ into or out of the box 15. As the distance of the seal from the wire face remains invariable, the pressure formed in the measurement box or the change in said pressure depends on the flow taking place through the wire. Since the flow-through P₁₆ required by the measurement box is controlled to take place expressly between the box and the moving face, at the same time a measurement arrangement free from contact is obtained.

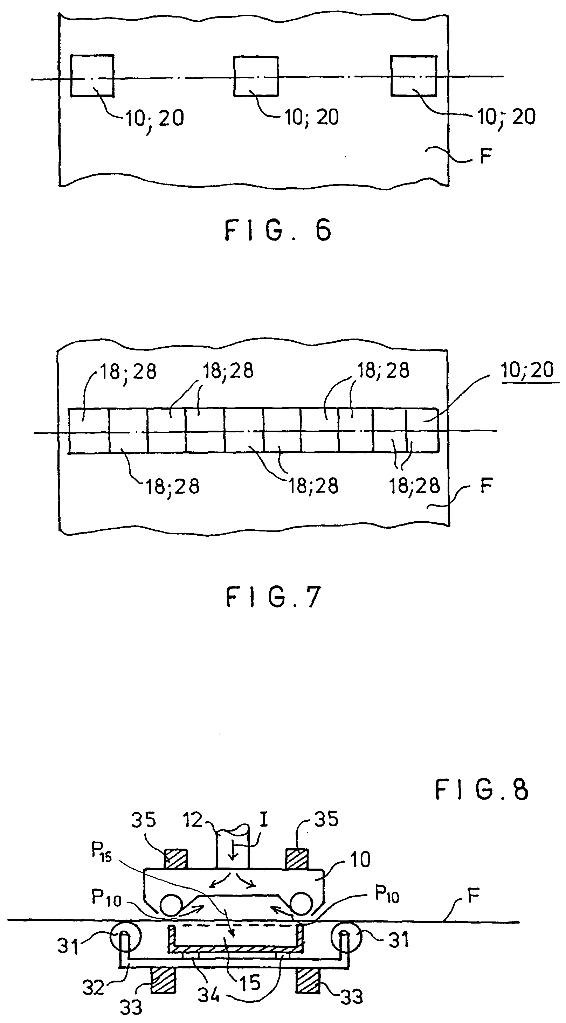

As is shown in Fig. 6, in an exemplifying embodiment of the invention blow boxes 10;20 are placed, in the direction of width of the drying wire F, in the lateral areas of the drying wire F and in its middle. By means of this arrangement, it is possible to compare the permeability of the wire at different points along the width of the drying wire F.

As is shown in Fig. 7, the blow box 10;20 can also be a continuous box of the width of the whole drying wire F in the cross direction of the machine, or it has been formed as separate blocks 18;28, in which case it is possible to measure the permeability of the drying wire at a number of points in the cross direction of the machine.

Fig. 8 shows a measurement device meant for a low speed, in particular to be used by manufacturers of drying wires. In this device the blow box 10 is placed above the drying wire F and is fixed to the measurement location by means of support constructions 35. Below the drying wire F there is the measurement box 15, which is supported on the frame constructions 32,33 and 34, and the wire F is kept at an invariable distance from the measurement box 15, for example, by means of support rolls or glide faces or equivalent 31. The frame constructions 34,35 can be mounted either as fixed or as displaceable, in which case it is possible to carry out the measurements at a certain location in the direction of width of the wire F, or to measure the cross-direction profile of permeability, respectively. The measurement diameter is, for example, 100...500 mm. The exemplifying embodiment shown in Fig. 8 is employed in particular in monitoring of the manufacture of new wires F, in which case the wire runs preferably at a crawling speed, for example about 10 metres per minute. The process of measurement is similar to the process described in relation to Fig. 1.

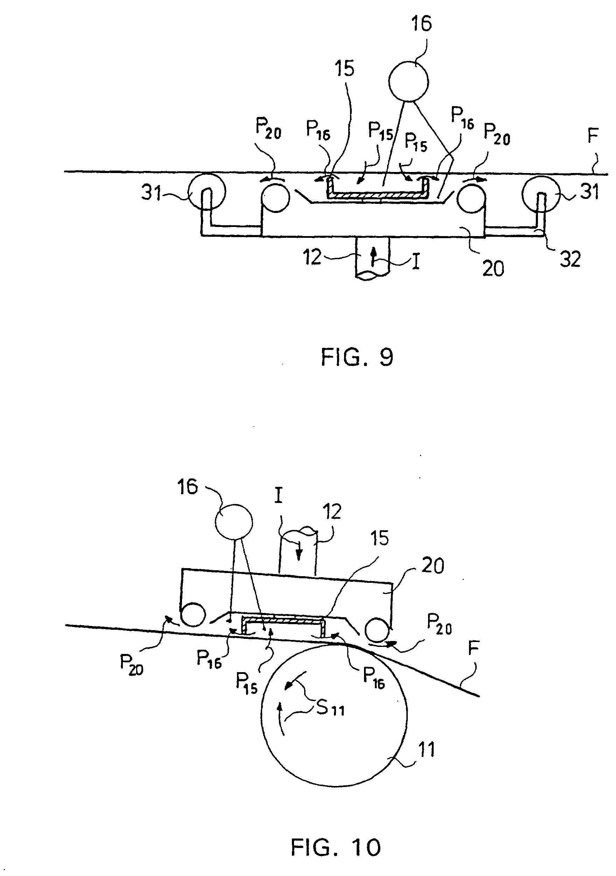

Fig. 9 shows a measurement device intended for a low speed, which is suitable in particular in connection with the manufacture of drying wires for measurement of their permeability to air. The exemplifying embodiment shown in Fig. 9 is substantially similar to that shown in Fig. 8, except that the measurement box 15 is placed at the same side of the wire F as the blow box 20. In the exemplifying embodiment shown in this illustration, the blow box 20 is a suction or vacuum box, but in stead of a suction box it is also possible to use a pressure box. The measurement box 15 is placed inside the blow box 20, and out of the edge nozzles of the blow box 20 flows P₂₀ are blown, which produce a vacuum between the drying wire F and the blow box 20, and then the flows P₁₆ pass out of the measurement box 15 between the edges of the measurement box 15 and the drying wire F, whereby the vacuum formed in the measurement box 15 produces a flow P₁₅ through the drying wire F, in which connection it is possible to determine the permeability of the drying wire F by measuring the pressure in the measurement box 15 by means of the pressure gauge 16. Based on the measurement of pressure, the relative pressure and/or the change in pressure is obtained. Regarding its principle of measurement and the other constructions, the measurement device shown in this figure is substantially similar to that shown in Fig. 8, and corresponding parts are denoted with the same reference numerals.

In the exemplifying embodiment shown in Fig. 10, the measurement of the permeability of the drying wire F is carried out from a nip of the roll 11. The running direction of the wire F is free, and the relative pressure and/or the change in the pressure in the measurement box is/are measured by means of the pressure gauge 16. In the exemplifying embodiment shown in the figure, the blow box 20 is a suction or vacuum box. Out of the blow box 20, air flows P₂₀ are blown, which produce a vacuum in the area between the blow box 20 and the drying wire F, in which connection flows P₁₆ are passed out of the measurement box 15, which flows P₁₆ seal the gap between the drying wire F and the measurement box and produce a contact-free measurement process, and a flow P₁₅ is produced towards the measurement box 15 through the drying wire F. In respect of its basic principles, the measurement process is similar to that described above in relation to the other figures.

Above, the invention has been described with reference to some preferred exemplifying embodiments of same only, and the invention is, however, not supposed to be strictly confined to the details of said embodiments.

## Claims

1. A method for measurement of the permeability to air of a drying wire, in which method the measurement is carried out continuously while the drying wire (F) moves, **characterized in that**, in the method, the drying wire (F) is guided to run so that it by-passes a blow box (10;20) and a measurement box (15), free of contact between the wire and the blow box (10;20) and the measurement box (15), a pressure/vacuum being produced by means of the blow box (10;20) in the area between the drying wire (F) and the blow box (10;20) to cause air to flow through the drying wire (F), that in the method the pressure in the measurement box (15) and/or the relative change in said pressure compared to a situation in which a blower of the blow box (10;20) does not blow air into the blow box, is/are measured when air is blown into the blow box (10;20) that the pressure and/or the relative change in the pressure is/are compared with earlier measurement results and/or starting values, that the permeability to air of the drying wire (F) is determined on the basis of comparison of the pressure and/or of the relative change in the pressure with earlier measurement results and/or starting values, and that a contact-free measurement between the wire and the measurement box (15) is produced by guiding a leakage air flow (P₁₆) into or out of the measurement box (15) to pass through the gap between the measurement box (15) and the drying wire (F).

2. A method as claimed in claim 1, **characterized in that**, in the method, the measurement is carried out when the paper machine runs at a full running speed.

3. A method as claimed in claim 1, **characterized in that**, in the manufacture of a wire, the measurement is carried out at a crawling speed.

4. A method as claimed in any of the claims 1 to 3, **characterized in that** by means of the blow box (10) a pressure is produced in the area between the drying wire (F) and the blow box (10), in which case air flows through the drying wire (F) into the measurement box (15).

5. A method as claimed in claim 4, **characterized in that** the blow box (10) and the measurement box (15) are placed in the area of the inlet nip (Nᵢₙ) of the drying wire (F) and a wire guide roll (11), which inlet nip (Nᵢₙ) is subjected to a positive pressure by the effect of pumping by the drying wire.

6. A method as claimed in any of the claims 1 to 3, **characterized in that** by means of the blow box (20) a vacuum is produced in the area between the drying wire (F) and the blow box (20), in which case air flows from the measurement box (15) to the other side of the drying wire (F).

7. A method as claimed in claim 6, **characterized in that** the blow box (20) is placed in the area of the outlet nip (Nₒᵤₜ) of the wire guide roll (11), which nip is subjected to a vacuum by the effect of the evacuation of air produced by the wire.

8. A method as claimed in any of the claims 1 to 3, **characterized in that**, by means of the blow box (20), a vacuum is produced in the area between the drying wire (F) and the blow box (20), air passing through the drying wire into the measurement box (15).

9. A method as claimed in claim 1 or 3, **characterized in that** the measurement is carried out at a crawling speed, and the wire (F) is guided to run over support rolls or over a glide face (31).

10. A method as claimed in any of the preceding claims, **characterized in that** the permeability of the drying wire (F) is measured at several points in the cross direction of the wire (F).

11. A method as claimed in any of the preceding claims, **characterized in that** the measurement is carried out substantially across the entire width of the drying wire (F).

12. A device for carrying out the method as claimed in any of the claims 1 to 11 for measurement of the permeability to air of a drying wire, which device is placed in the vicinity of the moving drying wire (F), **characterized in that** the device comprises a blow box (10;20) and a measurement box (15), the drying wire (F) being fitted to by-pass said boxes free of contact between the wire and the blow box (10;20) and the measurement box (15), a pressure/vacuum being produced by means of the blow box (10;20) in the area between the drying wire (F) and the blow box (10;20) to cause air to flow through the drying wire (F), so that a leakage air flow (P₁₆) into or out of the measurement box (15) is guided to pass through the gap between the measurement box (15) and the drying wire (F), as well as a pressure gauge for measurement of the pressure in the measurement box (15) and/or of the relative change in the pressure compared to a situation in which a blower of the blow box (10;20) does not blow air into the blow box.

13. A device as claimed in claim 12, **characterized in that** the blow box (10;20) comprises nozzles (17;27) for producing edge blowings in order to subject the area between the blow box (10;20) and the drying wire (F) to a positive pressure/to a vacuum.

14. A device as claimed in claim 12 or 13, **characterized in that** the device is placed in the area of the inlet nip (Nᵢₙ) of a wire guide roll (11) in the paper machine.

15. A device as claimed in claim 12 or 13, **characterized in that** the device is placed in the area of the outlet nip (Nₒᵤₜ) of the wire guide roll (11) in the paper machine.

16. A device as claimed in any of the claims 12 to 15, **characterized in that** the blow box (10;20) of the device is formed as separate blocks (18;28) across the width of the drying wire in the cross direction of the drying wire, each block (18;28) of said blocks being arranged to measure adjacent locations in the drying wire in the cross direction of the drying wire (F).

17. A device as claimed in claim 12 or 13, **characterized in that** the device further comprises frame constructions (35;32,33,34) for fixing the blow box (10) and the measurement box (15) displaceably/stationarily in their positions and support rolls or a glide face (31) for guiding the drying wire (F) so that it by-passes the blow box (10) and the measurement box.

## Patentansprüche

1. Verfahren zum Messen der Durchlässigkeit gegenüber Luft von einem Trocknungssieb, wobei bei dem Verfahren ein Messen kontinuierlich ausgeführt wird, während sich das Trocknungssieb (F) bewegt,
**dadurch gekennzeichnet, dass**
bei dem Verfahren das Trocknungssieb (F) so geführt wird, dass es derart läuft, dass es an einem Blaskasten (10; 20) und einem Messkasten (15) kontaktfrei zwischen dem Sieb und dem Blaskasten (10; 20) und dem Messkasten (15) vorbeitritt, wobei ein Druck / Unterdruck mittels des Blaskastens (10; 20) in dem Bereich zwischen dem Trocknungssieb (F) und dem Blaskasten (10; 20) erzeugt wird, um zu bewirken, dass Luft durch das Trocknungssieb (F) strömt,
bei dem Verfahren der Druck in dem Messkasten (15) und /oder die relative Änderung des Druckes im Vergleich zu einer Situation, bei der eine Blaseinrichtung des Blaskastens (10; 20) Luft in den Blaskasten bläst, gemessen wird / werden, wenn Luft in den Blaskasten (10; 20) geblasen wird,
der Druck und / oder die relative Änderung des Drucks mit früheren Messergebnissen und / oder Startwerten verglichen wird / werden,
die Durchlässigkeit gegenüber Luft von dem Trocknungssieb (F) auf der Grundlage des Vergleichs des Druckes und / oder der relativen Änderung des Druckes mit früheren Messergebnissen und / oder Startwerten bestimmt wird, und
eine kontaktfreie Messung zwischen dem Sieb und dem Messkasten (15) bewirkt wird, indem eine Leakageluftströmung (P₁₆) in den Messkasten (15) oder aus dem Messkasten (15) so geführt wird, das sie durch den Spalt zwischen dem Messkasten (15) und dem Trocknungssieb (F) tritt.

2. Verfahren gemäß Anspruch 1,
**dadurch gekennzeichnet, dass**
bei dem Verfahren das Messen ausgeführt wird, wenn die Papiermaschine bei voller Laufgeschwindigkeit läuft.

3. Verfahren gemäß Anspruch 1,
**dadurch gekennzeichnet, dass**
bei der Herstellung eines Siebes das Messen bei einer Schleichgeschwindigkeit ausgeführt wird.

4. Verfahren gemäß einem der Ansprüche 1 bis 3,
**dadurch gekennzeichnet, dass**
mittels des Blaskastens (10) ein Druck in dem Bereich zwischen dem Trocknungssieb (F) und dem Blaskasten (10) erzeugt wird, wobei in diesem Fall Luft durch das Trocknungssieb (F) in den Messkasten (15) strömt.

5. Verfahren gemäß Anspruch 4,
**dadurch gekennzeichnet, dass**
der Blaskasten (10) und der Messkasten (15) in dem Bereich des Einlaßspaltes (Nᵢₙ) des Trocknungssiebes (F) und einer Siebführungswalze (11) angeordnet sind, wobei der Einlaßspalt (Nᵢₙ) einem Überdruck durch die Pumpwirkung durch das Trocknungssieb unterworfen wird.

6. Verfahren gemäß einem der Ansprüche 1 bis 3,
**dadurch gekennzeichnet, dass**
mittels des Blaskastens (20) ein Unterdruck in dem Bereich zwischen dem Trocknungssieb (F) und dem Blaskasten (20) erzeugt wird, wobei in diesem Fall Luft von dem Messkasten (15) zu der anderen Seite des Trocknungssiebes (F) strömt.

7. Verfahren gemäß Anspruch 6,
**dadurch gekennzeichnet, dass**
der Blaskasten (20) in dem Bereich des Auslaßspaltes (Nₒᵤₜ) der Siebführungswalze (11) angeordnet ist, wobei der Spalt einem Unterdruck durch die durch das Sieb erzeugte Wirkung des Evakuierens von Luft unterworfen wird.

8. Verfahren gemäß einem der Ansprüche 1 bis 3,
**dadurch gekennzeichnet, dass**
mittels des Blaskastens (20) ein Unterdruck in dem Bereich zwischen dem Trocknungssieb (F) und dem Blaskasten (20) erzeugt wird, wobei Luft durch das Trocknungssieb in dem Messkasten (15) tritt.

9. Verfahren gemäß Anspruch 1 oder 3,
**dadurch gekennzeichnet, dass**
das Messen bei einer Schleichgeschwindigkeit ausgeführt wird und
das Sieb (F) so geführt wird, das es über Stützwalzen oder über eine Gleitfläche (31) läuft.

10. Verfahren gemäß einem der vorherigen Ansprüche,
**dadurch gekennzeichnet, dass**
die Durchlässigkeit des Trocknungssiebes (F) an verschiedenen Stellen in der Querrichtung des Siebes (F) gemessen wird.

11. Verfahren gemäß einem der vorherigen Ansprüche,
**dadurch gekennzeichnet, dass**
das Messen im Wesentlichen über die gesamte Breite des Trocknungssiebes (F) ausgeführt wird.

12. Vorrichtung zum Ausführen des Verfahrens gemäß einem der Ansprüche 1 bis 11 zum Messen der Durchlässigkeit gegenüber Luft von einem Trocknungssieb, wobei die Vorrichtung in der Nähe des sich bewegenden Trocknungssiebes (F) angeordnet ist,
**dadurch gekennzeichnet, dass**
die Vorrichtung folgendes aufweist: einen Blaskasten (10; 20) und einen Messkasten (15), wobei das Trocknungssieb (F) so eingesetzt ist, das es an den Kästen kontaktfrei zwischen dem Sieb und dem Blaskasten (10; 20) und dem Messkasten (15) vorbeitritt, wobei ein Druck / Unterdruck mittels des Blaskastens (10; 20) in dem Bereich zwischen dem Trocknungssieb (F) und dem Blaskasten (10; 20) erzeugt wird, um zu bewirken, dass Luft durch das Trocknungssieb (F) so strömt, das eine Leckageluftströmung (P₁₆) in den Messkasten (15) oder aus dem Messkasten heraus so geführt wird, dass sie durch den Spalt zwischen den Messkasten (15) und dem Trocknungssieb (F) tritt, und auch eine Druckmesseinrichtung zum Messen des Druckes in dem Messkasten (15) und / oder der relativen Änderung des Druckes im Vergleich zu einer Situation, bei der eine Blaseinrichtung des Blaskastens (10; 20) Luft nicht in den Blaskasten bläst.

13. Vorrichtung gemäß Anspruch 12,
**dadurch gekennzeichnet, dass**
der Blaskasten (10; 20) Düsen (17; 27) aufweist, um Randblasströme zu erzeugen, um den Bereich zwischen dem Blaskasten (10; 20) und dem Trocknungssieb (F) einem Überdruck /einem Unterdruck auszusetzen.

14. Vorrichtung gemäß Anspruch 12 oder 13,
**dadurch gekennzeichnet, dass**
die Vorrichtung in dem Bereich des Einlassspaltes (Nᵢₙ) einer Siebführungswalze (11) bei der Papiermaschine angeordnet ist.

15. Vorrichtung gemäß Anspruch 12 oder 13,
**dadurch gekennzeichnet, dass**
die Vorrichtung in dem Bereich des Auslassspaltes (Nₒᵤₜ) einer Siebführungswalze (11) bei der Papiermaschine angeordnet ist.

16. Vorrichtung gemäß einen der Ansprüche 12 bis 15,
**dadurch gekennzeichnet, dass**
der Blaskasten (10; 20) der Vorrichtung als separate Blöcke (18; 28) über die Breite des Trocknungssiebes in der Querrichtung des Trocknungssiebes ausgebildet ist, wobei jeder Block (18; 28) der Blöcke so eingerichtet ist, das er benachbarte Orte an dem Trocknungssieb in der Querrichtung des Trocknungssiebes (F) misst.

17. Vorrichtung gemäß Anspruch 12 oder 13,
**dadurch gekennzeichnet, dass**
die Vorrichtung des weiteren Rahmenkonstruktionen (35; 32, 33, 34) aufweist, um den Blaskasten (10) und den Messkasten (15) verschiebbar / ortsfest an ihren Positionen, und Stützwalzen oder eine Gleitseite (31) zu fixieren, um das Trocknungssieb (F) so zu führen, dass es an dem Blaskasten (10) und dem Messkasten vorbeitritt.

## Revendications

1. Procédé pour la mesure de la perméabilité à l'air d'une toile de séchage, procédé dans lequel la mesure est effectuée en continu tandis que se déplace la toile de séchage (F), **caractérisé en ce que**, dans le procédé, la toile de séchage (F) est guidée de façon à défiler en évitant une boîte de soufflage (10,20) et une boîte de mesure (15), sans contact entre la toile et la boîte de soufflage (10;20) et la boîte de mesure (15), une pression/vide étant produits au moyen de la boîte de soufflage (10;20) dans la zone entre la toile de séchage (F) et la boîte de soufflage (10;20) pour faire en sorte que l'air s'écoule à travers la toile de séchage (F), **en ce que** dans le procédé, la pression dans la boîte de mesure (15) et/ou le changement relatif dans ladite pression par rapport à une situation dans laquelle une soufflante de la boîte de soufflage (10;20) ne souffle pas d'air dans la boîte de soufflage, est/sont mesuré(s) lorsque de l'air est insufflé dans la boîte de soufflage (10;20); **en ce que** la pression et/ou le changement relatif de pression est/sont comparé(s) à des résultats de mesure antérieurs et/ou des valeurs de départ, **en ce que** la perméabilité à l'air de la toile de séchage (F) est déterminée sur la base de la comparaison de la pression et/ou du changement relatif de la pression par rapport à des résultats de mesure antérieurs et/ou des valeurs de départ, et **en ce qu'**une mesure sans contact entre la toile et la boîte de mesure (15) est effectuée en guidant une flux d'air de fuite (P16) dans et hors de la boîte de mesure (15) pour traverser l'espace libre entre la boîte de mesure (15) et la toile de séchage (F).

2. Procédé selon la revendication 1, **caractérisé en ce que**, dans le procédé, la mesure est effectuée lorsque la machine de production de papier fonctionne à pleine vitesse de marche.

3. Procédé selon la revendication 1, **caractérisé en ce que**, dans la fabrication d'une toile, la mesure est réalisée à une vitesse pas à pas.

4. Procédé selon l'une quelconque des revendications 1 à 3, **caractérisé en ce qu'**il est produit une pression au moyen de la boîte de soufflage (10) dans la zone entre la toile de séchage (F) et la boîte de soufflage (10), auquel cas l'air s'écoule à travers la toile de séchage (F) jusque dans la boîte de mesure (15).

5. Procédé selon la revendication 4, **caractérisé en ce que** la boîte de soufflage (10) et la boîte de mesure (15) sont placées dans la pince d'entrée (Nin) de la toile de séchage (F) et le rouleau de guidage de toile (11), laquelle pince d'entrée (Nin) est soumise à une pression positive sous l'effet de pompage par la toile de séchage.

6. Procédé selon l'une quelconque des revendications 1 à 3, **caractérisé en ce qu'**au moyen de la boîte de soufflage (20) il est produit un vide dans la zone entre la toile de séchage (F) et la boîte de soufflage (20), auquel cas l'air s'écoule depuis la boîte de mesure (15) vers l'autre côté de la toile de séchage (F).

7. Procédé selon la revendication 6, **caractérisé en ce que** la boîte de soufflage (20) est placée dans la zone de la pince de sortie (Nout) du rouleau de guidage de toile (11), laquelle pince est soumise à un vide sous l'effet de l'évacuation de l'air produite par la toile.

8. Procédé selon l'une quelconque des revendications 1 à 3, **caractérisé en ce que**, au moyen de la boîte de soufflage (20), il est produit un vide dans la zone entre la toile de séchage (F) et la boîte de soufflage (20), l'air traversant la toile de séchage jusque dans la boîte de mesure (15).

9. Procédé selon revendication 1 ou 3, **caractérisé en ce que** la mesure est effectuée à une vitesse pas à pas, et la toile (F) est guidée pour passer par-dessus les rouleaux de support ou par-dessus une face de glissement (31).

10. Procédé selon l'une quelconque des revendications précédentes, **caractérisé en ce que** la perméabilité de la toile de séchage (F) est mesurée en plusieurs points dans la direction transversale de la toile (F).

11. Procédé selon l'une quelconque des revendications précédentes, **caractérisé en ce que** la mesure est effectuée sensiblement sur toute la largeur de la toile de séchage (F).

12. Dispositif pour réaliser le procédé selon l'une quelconque des revendications 1 à 11 pour la mesure de la perméabilité à l'air d'une toile de séchage, lequel dispositif est placé à proximité de la toile de séchage mobile (F), **caractérisé en ce que** le dispositif comprend une boîte de soufflage (10;20) et une boîte de mesure (15), la toile de séchage (F) étant apte à éviter lesdites boîtes sans contact entre la toile et la boîte de soufflage (10:20) et la boîte de mesure (15), une pression/vide étant produits au moyen de la boîte de soufflage (10;20) dans la zone entre la toile de séchage (F) et la boîte de soufflage (10;20) pour faire en sorte que l'air s'écoule à travers la toile de séchage (F), un flux d'air de fuite (P16) étant ainsi guidé dans et hors de la boîte de mesure (15) pour traverser l'espace libre entre la boîte de mesure (15) et la toile de séchage (F), ainsi qu'un manomètre pour la mesure de la pression dans la boîte de mesure (15) et/ou du changement relatif de la pression par rapport à une situation dans laquelle une soufflante de la boîte de soufflage (10;20) ne souffle pas d'air dans la boîte de soufflage.

13. Dispositif selon la revendication 12, **caractérisé en ce que** la boîte de soufflage (10;20) comprend des tuyères (17;27) pour produire des soufflages de bord afin de soumettre la zone entre la boîte de soufflage (10;20) et la toile de séchage (F) à une pression positive/à un vide.

14. Dispositif selon la revendication 12 ou 13, **caractérisé en ce que** le dispositif est placé dans la zone de la pince d'entrée (Nin) d'un rouleau de guidage de toile (11) dans la machine de production de papier.

15. Dispositif selon la revendication 12 ou 13, **caractérisé en ce que** le dispositif est placé dans la zone de la pince de sortie (Nₒᵤₜ) du rouleau de guidage de toile (11) dans la machine de production de papier.

16. Dispositif selon l'une quelconque des revendications 12 à 15, **caractérisé en ce que** la boîte de soufflage (10;20) du dispositif est formée en tant que blocs séparés (18;28) sur la largeur de la toile de séchage dans la direction transversale de la toile de séchage, chacun des blocs (18;28) étant apte à mesurer les emplacements adjacents de la toile de séchage dans la direction transversale de la toile de séchage (F).

17. Dispositif selon la revendication 12 ou 13, **caractérisé en ce que** le dispositif comprend de plus des constructions de châssis (35;32,33,34) pour fixer la boîte de soufflage (10) et la boîte de mesure (15) de façon amovible/stationnaire dans leurs positions et les rouleaux de support ou une face glissante (31) pour guider la toile de séchage (F) de telle sorte qu'elle évite la boîte de soufflage (10) et la boîte de mesure.
